# EUROPÄISCHE PATENTANMELDUNG

(11) **EP 2 481 886 A1**
(43) Veröffentlichungstag der Anmeldung: **01.08.2012**
(21) Anmeldenummer: 11152526.7
(22) Anmeldetag: 28.01.2011
(51) Int. Cl.: F01D 11/00, F16J 15/32

(54) **Bürstendichtung mit Hinterschneidung**

(71) Anmelder: SIEMENS AKTIENGESELLSCHAFT, 80333 München (DE)
(72) Erfinder: Keferstein, Lutz, 46284 Dorsten (DE)

(57) **Zusammenfassung**

Die Erfindung betrifft eine Dichtungsanordnung für eine Turbomaschine, wobei die Dichtungsanordnung eine Bürstendichtung (1) aufweist, wobei die Bürstendichtung (1) in einer Nut (8) mit einer Hinterschneidung (9, 10) angeordnet ist.

## Beschreibung

Die Erfindung betrifft eine Dichtungsanordnung für eine Strömungsmaschine, zur Abdichtung eines Spaltes zwischen einer rotierenden Komponente und einer feststehenden Komponente, wobei die feststehende Komponente eine Bürstendichtung aufweist, wobei die Bürstendichtung Borsten und einen Borstenträger zum Aufnehmen der Borsten aufweist.

In Strömungsmaschinen mit rotierenden und feststehenden Komponenten werden Dichtelemente unterschiedlicher Bauart zur Abdichtung verschiedener Druckräume verwendet. Hierbei kommen zwischen den rotierenden und den stehenden Bauteilen, insbesondere berührungslose Dichtungen wie z.B. Labyrinthdichtungen oder nachgiebige berührende Dichtelemente zum Einsatz. Zu den nachgiebigen berührenden Dichtelementen werden u.a. sogenannte Bürstendichtungen gezählt, bei denen Borsten zur Abdichtung zwischen Räumen mit unterschiedlichen Drücken verwendet werden.

Während berührungslose Dichtungen zum Abdichten von Druckdifferenzen von einigen mbar (Millibar) bis zu mehreren 100 bar geeignet sind, ist der Verwendungsbereich von Bürstendichtungen selbst bei mehrstufiger Anordnung begrenzt.

Bei der rotierenden Komponente handelt es sich in der Regel um einen Rotor. Bei der feststehenden Komponente handelt es sich in der Regel um einen Stator bzw. einem Gehäuse. Unter einer Strömungsmaschine ist beispielsweise eine Dampfturbine, Gasturbine oder ein Verdichter zu verstehen. Bei einer Dampfturbine sind dem Rotor Laufschaufeln zugeordnet, die sich zusammen mit dem Rotor gegenüber den feststehenden Leitschaufeln sowie dem feststehenden Gehäuse drehen.

Um den Wirkungsgrad von Strömungsmaschinen zu erhöhen ist es erforderlich, sog. Leckageströmungen zwischen den feststehenden Komponenten und den rotierenden Komponenten zu minimieren. Unter dynamischen Dichtungsanordnungen werden Dichtungsanordnungen zur Abdichtung eines Spalts bezeichnet, die zwischen relativ zueinander rotierenden Bauteilen angeordnet sind. Hingegen wird unter einer statischen Dichtungsanordnung eine Dichtungsanordnung verstanden, die zur Abdichtung eines Spalts zwischen feststehenden Bauteilen ausgebildet ist.

Generell haben sich zur Abdichtung von Spalten zwischen relativ zueinander rotierenden Komponenten sogenannte Bürstendichtungen als effektiv bewährt. Die Bürstendichtungen verfügen über mehrere drahtartige Borsten, die an einem Borstenträger gehalten bzw. fixiert sind. In der Regel wird eine solche Bürstendichtung bzw. der Borstenträger in eine Nut eingebaut, wobei das frei Ende, das die Borten umfasst, herausragt. Diese freien Enden der Borsten stehen auf einem anderen, den Spalt definierenden, Bauteil.

Eine effektive Befestigung der Borstenträger in der Nut ist sinnvoll und sehr wichtig. Die Erfindung hat es sich zur Aufgabe gestellt, eine effektive Befestigung einer Bürstendichtung in einer Nut anzugeben.

Gelöst wird diese Aufgabe durch eine Dichtungsanordnung für eine Turbomaschine, zur Abdichtung eines Spalts zwischen einer bewegbaren Komponente und einer feststehenden Komponente, wobei die feststehende Komponente eine Bürstendichtung aufweist, wobei die Bürstendichtung Borsten und einen Borstenträger zum Aufnehmen der Borsten aufweist, wobei die feststehende Komponente eine Nut aufweist, in der der Borstenträger angeordnet ist, wobei die Nut eine erste Hinterschneidung aufweist.

Somit wird erfindungsgemäß vorgeschlagen, zunächst eine Nut in der feststehenden Komponente einzuarbeiten und in dieser Nut die Bürstendichtung, insbesondere den Borstenträger anzuordnen. Damit der Borstenträger in der Nut sicher gehalten ist, wird erfindungsgemäß eine erste Hinterschneidung vorgeschlagen, die ein Ausrutschen aus der Nut verhindern soll.

Vorteilhafte Weiterbildungen sind in den Unteransprüchen angegeben.

So wird in einer ersten vorteilhaften Weiterbildung die erste Hinterschneidung derart ausgebildet, dass eine Bewegung der Bürstendichtung in Richtung des Spalts verhindert wird. Dazu ist es erforderlich, dass im Grunde eine Einengung der Nut stattfindet, die ein Ausrutschen des Borstenträgers verhindert.

In einer vorteilhaften Weiterbildung ist die Bürstendichtung segmentartig ausgebildet. Somit würde die Bürstendichtung aus mehreren Bauteilen bestehen, die segmentartig ausgebildet sind. Somit wird verhindert, dass eine einzige, vergleichsweise große Komponente als Bürstendichtung in einer Nut eingebaut wird. Vielmehr wird vorgeschlagen, statt einer vergleichsweise großen Bürstendichtung mehrere Segmente auszubilden, die dadurch leichter in eine Nut eingebaut werden können.

In einer weiteren vorteilhaften Weiterbildung entspricht die Dicke des Borstenträgers im Wesentlichen der Breite der Nut. Somit wird ein Verklemmen des Borstenträgers in der Nut ermöglicht. Dazu werden Klemmelemente einfach zwischen dem Borstenträger und der Nutwand angeordnet.

In einer vorteilhaften Weiterbildung ist die erste Hinterschneidung derart ausgeführt, dass der Borstenträger in radialer Richtung eingeschoben werden kann. Dazu ist es erforderlich, dass der Borstenträger geringfügig kleiner als der Abstand zwischen der Hinterschneidung und der gegenüberliegenden Nutwand ausgebildet ist. Der Borstenträger wird in diese derart ausgebildete Nut eingeschoben und mit weiteren Klemmelementen gegen die Hinterschneidung gedrückt, so dass eine Bewegung des Borstenträgers aus der Nut heraus nicht möglich ist.

In einer weiteren vorteilhaften Weiterbildung wird eine zweite Hinterschneidung in der Nut ausgebildet. Dazu wird die zweite Hinterschneidung möglichst der ersten Hinterschneidung gegenüberliegend in die Nutwand eingearbeitet. Die Folge ist, dass der Borstenträger aufgrund seiner Dicke daran gehindert wird, aus der Nut bewegt zu werden.

In einer vorteilhaften Weiterbildung ist die erste Hinterschneidung und die zweite Hinterschneidung derart ausgebildet, dass die Bürstendichtung lediglich in tangentialer Richtung eingeschoben werden kann. Das bedeutet, dass der Borstenträger nicht in Richtung der Nut eingearbeitet wird, sondern vielmehr seitlich eingeschoben wird und zwar derart, dass der verdickte Borstenträger hinter der ersten und zweiten Hinterschneidung angeordnet ist. Somit wird erreicht, dass ein Herausnehmen aus der Nut von vornherein verhindert wird, unabhängig davon, ob weitere Klemmelemente verwendet werden. Es wird darüber hinaus vorgeschlagen, Klemmelemente zu verwenden, um eine vorteilhafte Fixierung der Bürstendichtung zu ermöglichen. Sofern die Dichtungsanordnung in einer rotationssymmetrisch ausgebildeten Komponente eingearbeitet werden soll, entspricht die tangentiale Richtung im Wesentlichen der Umfangsrichtung.

In einer weiteren vorteilhaften Weiterbildung wird in der Hinterschneidung ein Befestigungsmittel zum Einschnüren der Nut und zum Befestigen des Borstenträgers angeordnet. Mit dem Befestigungsmittel, das durch das Bauteil ragt, wird eine Kraft auf den Borstenträger derart ausgeübt, dass eine kraftschlüssige Verbindung zwischen der feststehenden Komponente und des Borstenträgers entsteht.

Vorteilhafterweise wird dafür vorgeschlagen, das Befestigungsmittel als Schraube oder als Stift auszubilden. Schrauben und/oder Stifte sind fertigungstechnisch leicht herzustellen. Des Weiteren ist mit einer Schraube oder einem Stift eine vergleichsweise hohe Anpresskraft möglich. Dadurch wird eine sehr feste Verbindung zwischen dem Borstenträger und der feststehenden Komponente ermöglicht.

In einer weiteren vorteilhaften Weiterbildung wird das Befestigungsmittel unter einem Winkel α, der Werte zwischen 10° und 80° aufweist, gegenüber der Nutwand angeordnet. Je nach Dicke und Ausfertigung des Borstenträgers erweist sich eine Anordnung des Befestigungsmittels unter den vorgenannten Winkeln als vorteilhaft.

In einer vorteilhaften Weiterbildung ist ein zweites Befestigungsmittel vorgesehen, das in der gegenüberliegenden Nutwand angeordnet ist. Dieses zweite Befestigungsmittel kann identisch zu dem ersten Befestigungsmittel sein.

Ausführungsbeispiele der Erfindung werden nachfolgend anhand der Zeichnung beschrieben. Diese sollen die Ausführungsbeispiele nicht maßstäblich darstellen, vielmehr ist die Zeichnung in schematisierter und/oder leicht verzerrter Form ausgeführt. Im Hinblick auf Ergänzungen der aus der Zeichnung unmittelbar erkennbaren Lehren wird hier auf den einschlägigen Stand der Technik verwiesen. Gleichlautende Bezugszeichen haben in den verschiedenen Figuren im Wesentlichen dieselbe Funktionsweise.

Im Einzelnen zeigt die Zeichnung in:
- Figur 1: eine Schnittdarstellung durch eine erste Ausführungsform der erfindungsgemäßen Bürstendichtung,
- Figur 2: eine Schnittdarstellung einer zweiten Ausführungsform der erfindungsgemäßen Bürstendichtung,
- Figur 3: eine Schnittdarstellung durch eine dritte Ausführungsform der erfindungsgemäßen Bürstendichtung.

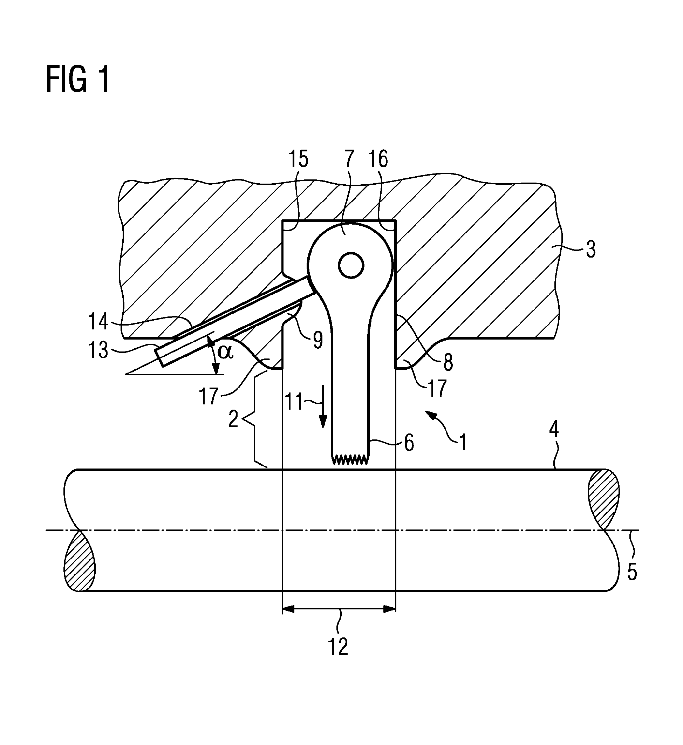

Die Figur 1 zeigt eine Schnittdarstellung durch eine Dichtungsanordnung für eine Turbomaschine umfassend eine Bürstendichtung 1, die einen Spalt 2 zwischen einer feststehenden Komponente 3 und einer bewegbaren Komponente 4 abdichtet. Die bewegbare Komponente 4 kann beispielsweise ein Rotor einer Turbomaschine, wie beispielsweise einer Dampfturbine, einem Verdichter oder einer Gasturbine sein. Der Übersichtlichkeit wegen sind keine Laufschaufeln auf der bewegbaren Komponente 4 gezeichnet. Die bewegbare Komponente 4 ist um eine Rotationsachse 5 rotierbar ausgeführt.

Die feststehende Komponente 3 kann beispielsweise ein Bauteil einer Dampfturbine, einer Gasturbine oder eines Verdichters sein. Beispielsweise könnte das feststehende Bauteil 3 ein Gehäuse darstellen.

Die Dichtungsanordnung ist für eine Turbomaschine, wie beispielsweise eine Dampfturbine, eine Gasturbine oder ein Verdichter ausgebildet, wobei die Dichtungsanordnung zum Abdichten eines Spalts 2 zwischen der bewegbaren Komponente 4 und der feststehenden Komponente 3 verwendet wird. Die Dichtungsanordnung weist eine Bürstendichtung 1 auf, wobei die Bürstendichtung 1 Borsten 6 und einen Borstenträger 7 zum Aufnehmen der Borsten 6 aufweist. Die Borsten 6 können beispielsweise aus einem Draht ausgebildet sein und können eine Oberfläche der bewegbaren Komponente 4 berühren. In die feststehende Komponente 3 ist eine Nut 8 ausgebildet, in der der Borstenträger 7 angeordnet ist. In diese Nut 8 ist eine erste Hinterschneidung 9 ausgebildet. Die Bewegung des Borstenträgers 7 ist somit in einer radialen Richtung 11 verhindert. Die Bürstendichtung 1 ist somit fest in der Nut 8 angeordnet. Die Bürstendichtung 1 ist segmentartig ausgebildet, was in den Figuren 1 bis 3 nicht dargestellt ist. In Umfangsrichtung wird dabei die Bürstendichtung 1 in mehrere Teile, die segmentartig sind, ausgebildet. Die Dicke des Borstenträgers 7 ist im Wesentlichen der Breite 12 der Nut 8 angepasst.

Die erste Hinterschneidung 9 wird gemäß Figur 1 derart ausgeführt, dass der Borstenträger 7 in radialer Richtung 11 eingeschoben werden kann. Dazu ist es erforderlich, dass mit der Hinterschneidung 9 genügend Platz bleibt für den Borstenträger 7, um in die Nut 8 eingeschoben werden zu können. In die feststehende Komponente 3 wird ein Befestigungsmittel 13, das als Stift oder als Schraube ausgebildet sein kann, eingearbeitet. Dieses Befestigungsmittel 13 wird unter einem Winkel α, der zwischen 10° und 80° liegt, angeordnet. Dazu wird eine Bohrung 14 in der feststehenden Komponente 3 ausgeführt. Das Befestigungsmittel 13 wird derart gegen den Borstenträger 7 gedrückt, dass eine kraftschlüssige Verbindung zwischen dem Borstenträger 7 und dem Befestigungsmittel 13 entsteht. Gemäß Figur 1 wird das Befestigungsmittel 13 in der Hinterschneidung 9 ausgeführt. Die Hinterschneidung 9 ist als Einengung der Nut 8 ausgeführt. Diese Einengung ist als Vorsprung in der Nutwand 15 ausgebildet. Das Befestigungsmittel 13 wird demnach in diesen Vorsprung angeordnet.

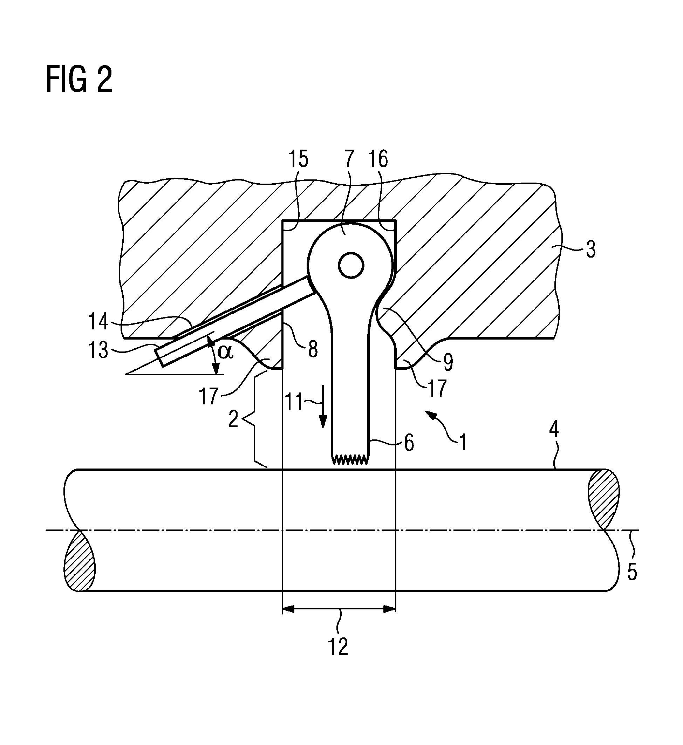

In der Figur 2 ist eine zweite Ausführungsform der Dichtungsanordnung zu sehen. Der Unterschied gemäß der Ausführungsform in Figur 2 gegenüber der Ausführungsform der Figur 1 ist, dass die Hinterschneidung 9 und das Befestigungsmittel 13 auf gegenüberliegenden Nutwänden 15, 16 angeordnet sind. Die Hinterschneidung 9 und das Befestigungsmittel 13 sind dabei derart ausgebildet, dass ein Herauslösen in radialer Richtung 11 aus der Nut 8 wirksam verhindert ist.

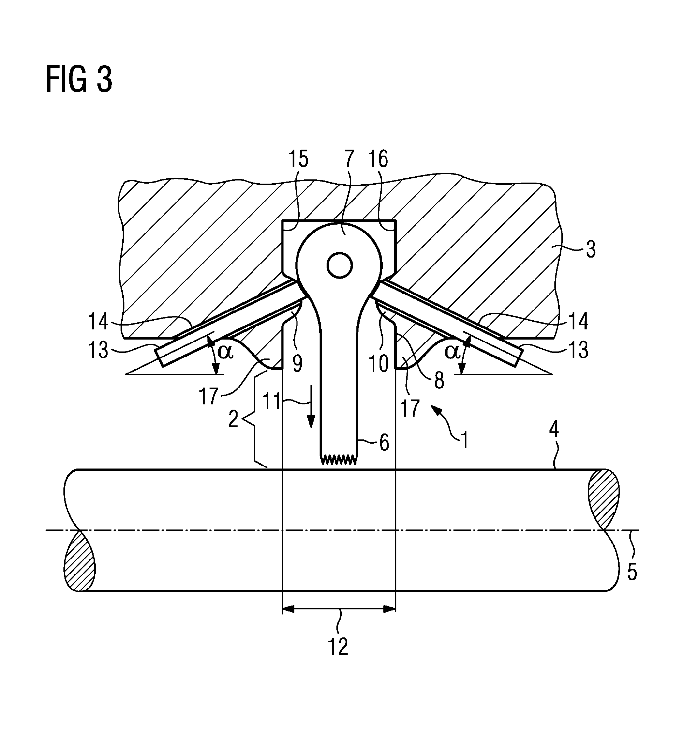

Die dritte Ausführungsform gemäß Figur 3 zeigt eine weitere Möglichkeit. Hierbei wird in jede Nutwand 15, 16 eine Hinterschneidung 9 und 10 angeordnet, in die jeweils ein Befestigungsmittel 13 angeordnet wird. Die Kräfte, die hierbei auf den Borstenträger 7 wirken, sind symmetrisch. Somit ist eine gleichmäßige Kraftverteilung auf die Bürstendichtung 1 gegeben. Zum Schutz der feststehenden Komponente 3 ist jeweils ein Vorsprung 17 berücksichtigt, der im Falle einer Berührung zwischen der feststehenden Komponente 3 und der bewegbaren Komponente 4 zuerst anstreift.

Die Befestigungsmittel 13 gemäß Figur 3 sind jeweils identisch unter einem Winkel α gegenüber der Rotationsachse 5 schräg ausgeführt. Des Weiteren kann das Material des Befestigungsmittels 13 gleich gewählt werden, damit die Kraftübertragung identisch ist.

## Patentansprüche

1. Dichtungsanordnung für eine Turbomaschine,
zur Abdichtung eines Spalts (2) zwischen einer bewegbaren Komponente (4) und einer feststehenden Komponente (3), wobei die feststehende Komponente (3) eine Bürstendichtung (1) aufweist,
wobei die Bürstendichtung (1) Borsten (6) und einen Borstenträger (7) zum Aufnahmen der Borsten (6) aufweist, wobei die feststehende Komponente (3) eine Nut (8) aufweist, in der der Borstenträger (7) angeordnet ist,
wobei die Nut (8) eine erste Hinterschneidung (9) aufweist.

2. Dichtungsanordnung nach Anspruch 1,
wobei die erste Hinterschneidung (9) eine Bewegung der Bürstendichtung (1) in Richtung (11) des Spalts (2) verhindert.

3. Dichtungsanordnung nach Anspruch 1 oder 2,
wobei die Bürstendichtung (1) segmentartig ausgebildet ist.

4. Dichtungsanordnung nach Anspruch 1, 2 oder 3,
wobei die Dicke des Borstenträgers (7) im Wesentlichen der Breite (12) der Nut (8) entspricht.

5. Dichtungsanordnung nach einem der vorhergehenden Ansprüche,
wobei die erste Hinterschneidung (9) derart ausgeführt ist, dass der Borstenträger (7) in radialer Richtung (11) eingeschoben werden kann.

6. Dichtungsanordnung nach einem der vorhergehenden Ansprüche,
wobei eine zweite Hinterschneidung (10) in der Nut (8) ausgebildet ist.

7. Dichtungsanordnung nach Anspruch 6,
wobei die zweite Hinterschneidung (10) an der der ersten Hinterschneidung (9) gegenüberliegenden Nutwand (15, 16) angeordnet ist.

8. Dichtungsanordnung nach Anspruch 6 oder 7,
wobei die erste Hinterschneidung (9) und die zweite Hinterschneidung (10) derart ausgebildet sind, dass die Bürstendichtung (1) lediglich in einer tangentialer Richtung (11) eingeschoben werden kann.

9. Dichtungsanordnung nach einem der vorhergehenden Ansprüche,
wobei in der Hinterschneidung (9, 10) ein Befestigungsmittel (13) zum Einschnüren der Nut (8) und zum Befestigen des Borstenträgers (7) angeordnet ist.

10. Dichtungsanordnung nach Anspruch 9,
wobei das Befestigungsmittel (13) als Schraube oder als Stift ausgebildet ist.

11. Dichtungsanordnung nach Anspruch 9 oder 10,
wobei das Befestigungsmittel (13) unter einem Winkel α, der Werte zwischen 10° und 80° aufweist,
gegenüber der Nutwand (15, 16) angeordnet ist.

12. Dichtungsanordnung nach einem der Ansprüche 9 bis 11, wobei ein zweites Befestigungsmittel (13) vorgesehen ist.
